Europäisches Patentamt

European Patent Office

Office européen des brevets

(19)

(11) Publication number: 0 064 806
A1

(12) EUROPEAN PATENT APPLICATION

(21) Application number: 82301549.0

(22) Date of filing: 24.03.82

(51) Int. Cl.³: **C 09 J 1/00**
**C 08 J 5/12**

(30) Priority: 06.04.81 US 251665

(43) Date of publication of application:
17.11.82 Bulletin 82/46

(84) Designated Contracting States:
CH DE FR GB IT LI NL

(71) Applicant: THE UNITED STATES OF AMERICA as
represented by the Secretary U.S. Department of
Commerce
National Technical Information Service Office of
Government Inventions and Patents 5285 Port Royal
Road
Springfield, Virginia 22161(US)

(72) Inventor: Serota, Samuel H.
1809 Mower Street
Philadelphia, PA. 19152(US)

(72) Inventor: Marmer, William Nelson
1020 Hartranft Avenue
Fort Washington, Pa. 19034(US)

(74) Representative: De Minvielle-Devaux, Ian Benedict
Peter et al,
CARPMAELS & RANSFORD 43, Bloomsbury Square
London WC1A 2RA(GB)

(54) High shear strength adhesive and method for bonding nylon to nylon.

(57) An adhesive and method for providing a high shear
strength bond of nylon to nylon. The bond exhibits a shear
tensile strength of greater than 7100 p.s.i. The adhesive is a
solution of 2.0 to 10%, v/v, stabilized sulfur trioxide in
methylene chloride.

Croydon Printing Company Ltd.

EP 0 064 806 A1

-1-

High shear strength adhesive and
method for bonding nylon to nylon.

## BACKGROUND OF THE INVENTION

1.  Field of the Invention

This invention relates to a high shear strength
adhesive for bonding nylon to nylon.

2.  Description of the Prior Art

The present state of the art for bonding nylon
to nylon is described in a report by E.M. Lacey and
Leo Samson entitled "Bonding Agents for Zytel,"
E. I. DuPont de Nemours & Co., Inc., Plastics Department, Technical Services Laboratory, TR #193,
April 25, 1975.  Procedures using aqueous phenol, resorcinol-ethanol, and calcium chloride-ethanol-zytel
agents are described for bonding nylon to nylon.
Curing times of several hours to several days are
required to attain maximum strength.  In some cases,
high temperatures are also necessary.  The maximum
shear tensile strengths obtained were 2400 p.s.i.

## BRIEF SUMMARY OF THE INVENTION

An object of this invention is to provide a high
strength adhesive for bonding nylon to nylon.

Another object of this invention is to provide
a method of bonding one nylon element to another
nylon element in which the shear tensile strength of
the bonded elements is greater than 7100 p.s.i.

Still another object is to provide a method of preparing a laminate of nylon which has a tensile strength of greater than 7100 p.s.i.

According to this invention, the above objects are accomplished by a high shear strength adhesive for bonding nylon to nylon characterized by its ability to provide a bond which exhibits a shear tensile strength of greater than 7100 p.s.i., by a method of using the adhesive to bond one nylon element to another nylon element, and by a method of making a laminate of nylon. The adhesive is a 2.0 to 10.0%, v/v, solution of stabilized $SO_3$ in methylene chloride.

## DETAILED DESCRIPTION OF THE INVENTION

We discovered the adhesive of the present invention while treating cotton-nylon blend fabric for other purposes with a solution of isopropenyl stearate and stabilized sulfur trioxide in methylene chloride. Instead of obtaining the results we expected, the fabric seemed to partially dissolve and form a sticky mass. When we tried the same experiment in the absence of isopropenyl stearate, we observed the same result.

Upon further experimentation we found that the adhesive bonds nylon to nylon with the resulting bonded joint having a much higher shear tensile strength than that of untreated nylon. Surprisingly, and quite unexpectedly, we found that the bonded joint exhibited a shear tensile strength of greater than 7100 p.s.i. We also found that to obtain a practical useful bond the amount of stabilized sulfur trioxide can be varied from 2.0 to 10.0% in methylene chloride, v/v. However, we also found that for the purposes of our invention the amount of stabilized sulfur trioxide must be within the above limits. When the amount of $SO_3$ was lower than 2.0%, we were not able to obtain enough adhesion to bond the nylon surfaces to each other even when we applied pressure. When we used solutions containing more than 10.0% $SO_3$, the bonded surfaces became very brittle and broke easily when flexed even moderately. We found that a solution of 4.0%, v/v, stabilized $SO_3$ in $CH_2Cl_2$ gave the best results; consequently, our preferred adhesive is one having such a concentration.

The solution of stabilized $SO_3$, 2.0 to 10.0%, v/v, in methylene chloride can be applied to the surfaces to be bonded with a brush or a cotton swab or by any other suitable means. For best results, the surfaces to be bonded should be cleaned thoroughly prior to applying the adhesive of this invention. The surfaces of the nylon elements to be bonded must also be dry to ensure that the desired bond is obtained.

Sulfur trioxide is stabilized against polymerization to solids by addition of a small quantity (as low as 0.1%) of various compounds - especially derivatives of boron, phosphorus, or sulfur as documents in "Sulfonation and Related Reactions" Everett E. Gilbert, Allied Chemical Corp., N.J., Interscience Publishers, 1965, pages 2-3. The small quantity of compound added acts as an inhibitor to prevent the formation of the high melting alpha form of the solid. Sulfan from Allied Chemical Corp. was used in our experiments.

Tensile strength was measured by a method essentially as described in ASTM Designation D 638-68.

Since the $CH_2Cl_2$ is only a carrier for the $SO_3$, there is no reason why other solvents such as $ClH_2C - CH_2Cl$ and $CCl_4$ cannot be used as diluents.

In our experiments, the Zytel 101 strips were 1/16" thick, 6" long and 1" wide. We used about 1" on an end of each strip as a mating surface and applied adhesive, usually by painting it on, to one of the mating surfaces. The other mating surface was not treated. The mating surfaces were pressed together and then held in a vise under uniform pressure.

The following examples illustrate the invention and its scope:

## EXAMPLE 1

A solution of stabilized $SO_3$, 4.0%, v/v, in $CH_2Cl_2$ was painted on a mating surface of a strip of Zytel 101 general purpose unlubricated basic 66 nylon which, according to The Condensed Chemcial Dictionary, 6th Edition, Reinhold Publishing Corp., N.Y., 1961, is a nylon obtained by the condensation of hexamethylene-diamine with adipic acid (polyhexamethylene adipamide). The treated mating surface was pressed together with the mating surface of an untreated strip of Zytel 101 and then held in a vise under a uniform pressure of about 10 p.s.i. for about three minutes at an ambient room temperature of about 22° to 28°C and air cured at the same ambient room temperature for about 48 hours. The bonded joint exhibited a shear tensile strength greater than 7100 p.s.i.

## EXAMPLE 2

Various concentrations of stabilized $SO_3$ in $CH_2Cl_2$, v/v, were tested for their bonding properties on Zytel 101 under the same conditions, except for concentration of $SO_3$ in $CH_2Cl_2$, as in Example 1. We found that concentrations greater than 10.0% and less than 2.0% stabilized $SO_3$ in $CH_2Cl_2$, v/v, were not of practical use for bonding nylon to nylon.

## EXAMPLE 3

Solutions containing 2.0% and 4.0% respectively, on a w/w basis, of 30% fuming $H_2SO_4$ in $CH_2Cl_2$ were used as bonding agents for Zytel 101 as in Example 1. Neither solution provided a bond. The joints became tacky but did not cure to bond.

### EXAMPLE 4

Four separate pairs of Zytel 101 strips were treated as in Example 1 except that the air-curing time was varied as shown below from 3 to 31 hours.

| Curing time hours | Tensile strength p.s.i. |
|---|---|
| 3 | 250 |
| 14.5 | 325 |
| 24.0 | 375 |
| 31.0 | 350 |

### EXAMPLE 5

A solution of thionyl chloride in $CH_2Cl_2$, 4% v/v, was tested as a bonding agent for Zytel 101 under the conditions described in Example 1. The results were unsatisfactory because the bonded joint came apart at 235 pounds of pull.

### EXAMPLE 6

A solution of chlorosulfonic acid in $CH_2Cl_2$, 4%, v/v, was tested as a bonding agent for Zytel 101 under the conditions described in Example 1. The results were unsatisfactory because one of two strips which were joined together broke in the area of adhesion at approximately 1800 p.s.i. Chlorosulfonic acid appears to make the Zytel 101 brittle and this is believed to be the reason for the break.

### EXAMPLE 7

A solution of thionyl chloride in $CH_2Cl_2$, 4%, v/v, was tested as a bonding agent for Zytel 101 under the conditions described in Example 1 except that the curing time was 64.5 hours. The results were unsatisfactory because the joint separated at 123 pounds of pull.

### EXAMPLE 8

A solution of chlorosulfonic acid in $CH_2Cl_2$, 4% v/v, was tested as a bonding agent for Zytel 101 under the conditions described in Example 1 except that the curing time was 64.5 hours. The results were unsatisfactory because the joint separated at only 11 pounds of pull. In this case the joint apparently did not cure properly.

The invention, which provides a means of bonding nylon to nylon in which the bond has a shear tensile strength greater than that provided by other available means of adhesion, should be very useful in many industrial applications.

CLAIMS

1. A high shear strength adhesive for bonding nylon to nylon comprising a solution of from 2.0 to 10.0%, v/v, stabilized $SO_3$ in methylene chloride, said adhesive being characterized by providing a bonded joint which exhibits a shear tensile strength of greater than 7100 p.s.i.

2. The high shear strength adhesive of Claim 1 wherein the solution contains 4.0%, v/v, stabilized $SO_3$ in methylene chloride.

3. In a method for bonding one nylon element to another nylon element wherein at least one surface of one of the nylon elements is treated with sulfur trioxide and the treated surface of the one nylon element pressed against one of the surfaces of the other nylon element, the improvement wherein the shear tensile strength of the bonded elements is greatly increased to more than 7100 p.s.i., comprising, ensuring that the surfaces of the nylon elements to be bonded are dry, applying to at least one of said dry surfaces of one nylon element a solution containing from 2.0 to 10.0%, v/v, of stabilized $SO_3$ in methylene chloride, pressing the $SO_3$ treated surface of the one nylon element to a dry surface of a second nylon element to bond the two elements, applying a uniform pressure to the bonded elements, and then air curing the bonded elements.

4. The method of Claim 3 wherein a uniform pressure of ten p.s.i. is applied for about three hours at a temperature of from 22°-28°C to the bonded nylon elements and then the bonded elements air cured at from 22°-28°C for about 48 hours.

5. A process for preparing a laminate of nylon, comprising,

    a) ensuring that the nylon elements to be laminated are dry;

    b) applying to at least one of the mating surfaces of the nylon to be laminated a solution of from 2.0% to 10.0%, v/v, stabilized $SO_3$ in methylene chloride;

    c) pressing the mating surfaces together in the form of a laminate;

    d) applying to said laminated surfaces a uniform pressure of about 10 p.s.i. for about three minutes at a temperature of 22° to 28°C; and

    e) air curing said laminate at aout 22° to 28°C for about 48 hours, said laminate then having a tensile strength greater than 7100 p.s.i.

6. The laminate of nylon prepared by the process of Claim 5.

**0064806**

European Patent
Office

**EUROPEAN SEARCH REPORT**

Application number

EP 82 30 1549

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | CHEMICAL ABSTRACTS, vol.92, 1980, page 43, abstract no.7536n, Columbus, Ohio (US) & US - A - 12 772, (UNITED STATES DEPT. OF AGRICULTURE)· (September 14, 1979) | 1-6 | C 09 J 1/00 C 08 J 5/12 |
| | ----- | | |

TECHNICAL FIELDS SEARCHED (Int. Cl. ³)

C 09 J 1
C 09 J 5
C 08 J 5/12

The present search report has been drawn up for all claims

| Place of search THE HAGUE | Date of completion of the search 15-07-1982 | Examiner GIRARD Y.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82